# FASCICULE DE BREVET EUROPEEN

(11) **EP 3 800 408 B1**
(45) Date de publication et mention de la délivrance du brevet: **17.12.2025**
(21) Numéro de dépôt: 20199078.5
(22) Date de dépôt: 29.09.2020
(51) Int. Cl.: F24S 40/80, F24S 10/70, F24S 10/75, F24S 70/225, F24S 80/50, F24S 80/60

(54) **CAPTEUR SOLAIRE THERMIQUE MODULAIRE**
MODULARER SOLARTHERMIE-KOLLEKTOR
MODULAR THERMAL SOLAR SENSOR

(30) Priorité: 01.10.2019 FR 1910878
(43) Date de publication de la demande: 07.04.2021
(73) Titulaire: Commissariat à l'Energie Atomique et aux Energies Alternatives, 75015 Paris (FR)
(72) Inventeur: TANTOLIN, Christian, 38054 GRENOBLE CEDEX 09 (FR)
(74) Mandataire: Santarelli

(56) Documents cités:
- WO-A1-2014/146040
- WO-A2-2011/032164
- JP-A- 2012 026 714
- US-A- 4 119 085
- US-A- 4 311 131
- US-A- 4 653 471
- US-A1- 2011 277 470

## Description

### DOMAINE TECHNIQUE

La présente invention se rapporte au domaine général des capteurs solaires thermiques pour la production de chaleur.

L'invention propose ainsi un capteur solaire thermique modulaire, ainsi qu'un champ solaire comprenant une pluralité de tels capteurs.

### ÉTAT DE LA TECHNIQUE ANTÉRIEURE

En France, environ la moitié de la consommation de l'énergie est faite sous forme de chaleur. De plus, la France s'est donnée pour ambition d'atteindre une neutralité carbone en 2050, et de ce fait le vecteur chaleur va prendre une place importante dans les moyens mis en œuvre pour atteindre cet objectif.

Jusqu'à ces dernières années, la mise en œuvre des capteurs solaires thermiques était essentiellement réalisée sur des bâtiments individuels et/ou collectifs dans un objectif de chauffage d'eau chaude sanitaire ou pour le chauffage du bâtiment. Les surfaces de capteurs solaires étaient comprises entre 2 et 30 m². Ces marchés sont toujours présents mais sont en stagnation car ils se heurtent à la concurrence du solaire photovoltaïque (PV) et à celle des ballons solaires thermodynamiques (chauffage de l'eau chaude par l'intermédiaire d'une pompe à chaleur). Depuis quelques années et compte-tenu des objectifs et des enjeux climatiques, deux nouveaux marchés sont en émergence au niveau européen et mondial : le solaire thermique pour réseau de chaleur ; le solaire thermique pour l'industrie (encore dénommé SHIP pour « Solar Heat for Industrial Process » en anglais).

Ces deux marchés conduisent à la réalisation de champs solaires de grandes tailles, typiquement de 1000 à 50000 m². Le Danemark a été un pays pilote sur ce type de marché où, grâce à une politique incitative, environ 1,37 millions de m² ont été installés ces dix dernières années.

Afin de faciliter la mise en œuvre et de réduire les coûts, les capteurs thermiques utilisés sur ces installations sont généralement de grandes tailles, c'est-à-dire de 10 à 15 m² contre des surfaces de 1 à 5 m² pour des capteurs conventionnels.

Par ailleurs, deux technologies de capteurs solaires thermiques sont présentes sur le marché : les capteurs solaires de type à tube sous vide ; et les capteurs solaires de type plan.

Ces deux technologies appliquées à des capteurs de petites surfaces ont été largement investiguées et ont fait l'objet de nombreuses publications. Elles ont aussi été employées pour des capteurs de grandes surfaces.

Par exemple, la demande internationale WO 2013/053979 A1 divulgue un capteur solaire de type plan avec une surface de l'ordre de 15 m². Il y est décrit une méthode pour la réalisation d'un absorbeur en aluminium sur lequel est déposé un traitement sélectif. Ce dépôt sélectif permet d'absorber le rayonnement solaire visible et de limiter les pertes par réémission dans l'infrarouge. La technologie proposée permet de déposer le traitement sélectif en une seule fois sur toute la surface, ce qui permet un gain de coût. Pour cela, l'absorbeur est réalisé par la mise en parallèle de profilés en aluminium qui sont ensuite brasés ou soudés sur les collecteurs. Il s'agit donc d'une technologie conforme à la technologie traditionnelle mais améliorée pour permettre la production de capteurs de grandes surfaces et à moindre coût.

En outre, la demande internationale WO 2014/146040 A1 propose une conception de capteur solaire avec la présence d'un tube caloduc permettant de faire le lien entre l'absorbeur et le collecteur, et la présence d'un contact thermique entre les caloducs et le collecteur. Dans ce document, le contact thermique entre le collecteur et le condenseur du caloduc est rigide, effectué par des vis, sans glissement entre les deux surfaces. De plus, le capteur proposé ne peut pas être utilisé sur des champs solaires de grandes tailles si la dilatation thermique du collecteur n'est pas gérée par un autre moyen. Il existe également une liaison mécanique, par vissage ou soudure, entre les collecteurs de plusieurs capteurs consécutifs, et il n'est pas possible d'avoir de longue ligne de capteurs sur un seul collecteur. En outre, il n'y a pas de gestion des phénomènes de dilatation différentielle.

On connaît également le brevet français FR 2 942 028 B1 qui décrit une technologie de capteur solaire adaptée à des champs solaires de grandes dimensions avec la présence de systèmes à caloduc et la présence d'un collecteur tubulaire de grande dimension, avec une longueur de l'ordre de la centaine de mètres. Par contre, seuls des collecteurs à tube sous vide peuvent être utilisés sur ce système. Dans ce document, la gestion de la dilatation est réalisée grâce à l'utilisation de tubes sous vide. Les caloducs sont mécaniquement liés au collecteur, et il n'y a pas de déplacement mécanique, l'utilisation d'un matériau d'interface thermique est préconisée. De ce fait, c'est l'ensemble formé par la partie collecteur, le condenseur des caloducs, l'isolant et la partie supérieure des tubes en verre qui se déplace sous l'effet de la dilatation. La partie inférieure des tubes en verre est fixe car elle est mécaniquement liée au châssis. Les tubes en verre sont donc soumis au cisaillement lors de la dilatation et la liaison mécanique entre tube en verre et isolant doit être souple pour permettre ce mouvement.

Par ailleurs, le modèle d'utilité chinois CN 203518297 U divulgue des capteurs solaires à tubes sous vide à caloduc. Il s'agit ici d'améliorer le contact thermique entre le condenseur du caloduc et le collecteur en permettant une condensation directe du fluide caloporteur du caloduc sur le collecteur. Cela permet d'utiliser des tubes collecteurs de gros diamètre mais la liaison caloduc/collecteur est rigide.

Le document US 4 119 085 A montre un capteur solaire thermique selon le préambule de la revendication 1.

### EXPOSÉ DE L'INVENTION

L'invention a pour but de remédier au moins partiellement aux besoins mentionnés précédemment et aux inconvénients relatifs aux réalisations de l'art antérieur.

En particulier, l'invention vise à proposer une solution alternative de capteur solaire thermique de type plan et modulaire, destinée à la réalisation de champs solaires de grandes tailles, sous forme de rangées de capteurs de grandes longueurs.

L'invention a ainsi pour objet, selon l'un de ses aspects, un capteur solaire thermique, caractérisé en ce qu'il comporte :
- un élément formant la face avant du capteur solaire,
- un volume interne refermé par le biais d'au moins une partie de l'élément formant la face avant du capteur solaire,
- un absorbeur, situé au moins en partie dans le volume interne, configuré pour absorber le rayonnement solaire et le transformer en chaleur, l'absorbeur comprenant un revêtement sélectif permettant de limiter les pertes thermiques vers le milieu ambiant par rayonnement dans l'infrarouge,
- un tube collecteur, situé dans le volume interne de sorte que l'absorbeur soit entre l'élément formant la face avant du capteur solaire et le tube collecteur, comprenant un fluide caloporteur destiné à être réchauffé par le rayonnement solaire,
- un moyen de transfert de chaleur, situé dans le volume interne entre l'absorbeur et le tube collecteur,
- un élément de contact thermique glissant, situé dans le volume interne entre le moyen de transfert de chaleur et le tube collecteur, configuré pour assurer le transfert thermique et le déplacement entre le moyen de transfert de chaleur (6) et le tube collecteur dû aux dilatations thermiques.

Avantageusement, le capteur solaire thermique selon l'invention est un capteur solaire de type plan.

Le capteur solaire peut comporter une coque formant la face arrière du capteur solaire, définissant le volume interne qui est refermé par le biais d'au moins une partie de l'élément formant la face avant du capteur solaire.

Selon l'invention, le capteur solaire comporte un châssis mécanique, solidarisé à l'extérieur du volume interne, notamment à la coque, configuré pour permettre la fixation du capteur solaire au sol et le support du tube collecteur tout en autorisant une dilatation différentielle axiale du tube collecteur. Par « sol », on entend un élément de support rigide, pouvant aussi être une toiture.

L'élément formant la face avant du capteur solaire peut être une vitre transparente.

De plus, le capteur solaire thermique peut comporter un élément d'isolation, situé dans le volume interne, notamment entre la coque et l'ensemble formé par l'absorbeur, le moyen de transfert de chaleur, l'élément de contact thermique glissant et le tube collecteur, configuré pour limiter les pertes thermiques vers le milieu ambiant.

L'élément formant la face avant du capteur solaire peut encore être un module photovoltaïque.

Par ailleurs, le moyen de transfert de chaleur peut comporter un matériau à haute conductivité thermique.

En variante, le moyen de transfert de chaleur peut comporter un système à changement de phase, par exemple un caloduc, un thermosiphon, une boucle diphasique et/ou une boucle à pompage capillaire.

L'élément formant la face avant du capteur solaire thermique, l'absorbeur et la coque sont avantageusement fixes les uns par rapport aux autres, tandis que le tube collecteur est avantageusement apte à se dilater selon axe longitudinal.

En outre, le capteur solaire thermique peut comporter un moyen de couplage assurant la liaison entre le moyen de transfert de chaleur et le tube collecteur, cette liaison étant de type glissière en translation ou de type pivot glissant.

L'absorbeur et le moyen de transfert de chaleur peuvent être constitués, en totalité ou en partie, d'une même et seule pièce, le moyen de transfert de chaleur étant sous la forme d'un tube, notamment d'un caloduc ou d'un thermosiphon.

Par ailleurs, l'invention a également pour objet, selon un autre de ses aspects, un champ solaire, caractérisé en ce qu'il comporte une pluralité de lignes solaires, comprenant chacune une pluralité de capteurs solaires thermiques tel que celui défini précédemment, les lignes solaires étant notamment disposées de façon parallèle les unes aux autres.

La longueur de chaque ligne solaire peut être comprise entre 10 m et 300 m, étant notamment supérieure ou égale à 20 m, voire encore supérieure ou égale à 100 m.

Par ailleurs, la surface de champ solaire formée par l'ensemble des capteurs solaires thermiques peut être comprise entre 20 m² et 50000 m².

En outre, les capteurs solaires thermiques peuvent comporter chacun une coque de conception modulaire, comprenant l'assemblage directement sur le champ solaire, ou de conception unitaire, comprenant un assemblage préalable avant installation sur le champ solaire.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
La figure 1 représente, selon une vue de dessus, un premier exemple de capteur solaire thermique conforme à l'invention,
La figure 2 représente, selon une vue en coupe, le capteur solaire thermique de la figure 1
La figure 3 représente la chaîne cinématique du capteur solaire thermique des figure 1 et figure2,
La figure 4 illustre, partiellement et schématiquement, un capteur solaire thermique conforme à l'invention comprenant un moyen de couplage sous forme de ressorts,
La figure 5 illustre, partiellement et schématiquement, un capteur solaire thermique conforme à l'invention comprenant un autre moyen de couplage sous forme de lame métallique,
La figure 6 illustre, partiellement et schématiquement, une configuration de deux absorbeurs et deux moyens de transfert de chaleur de deux capteurs solaires thermiques adjacents conformes à l'invention,
La figure 7 et la figure 8 illustrent partiellement et schématiquement, respectivement selon une vue en perspective et selon une vue en coupe, une conception modulaire de coque de capteur solaire thermique conforme à l'invention,
La figure 9 illustre partiellement et schématiquement, selon une vue en coupe, un conception unitaire de coque de capteur solaire thermique conforme à l'invention,
La figure 10 représente, selon une vue de dessus, un exemple de champ solaire comportant une pluralité de capteurs solaires thermiques conformes à l'invention,
La figure 11 représente, selon une vue en coupe, un deuxième exemple de capteur solaire thermique conforme à l'invention,
La figure 12 représente la chaîne cinématique du capteur solaire thermique de la figure 11, et
La figure 13 représente la chaîne cinématique d'une variante de réalisation de capteur solaire thermique conforme à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

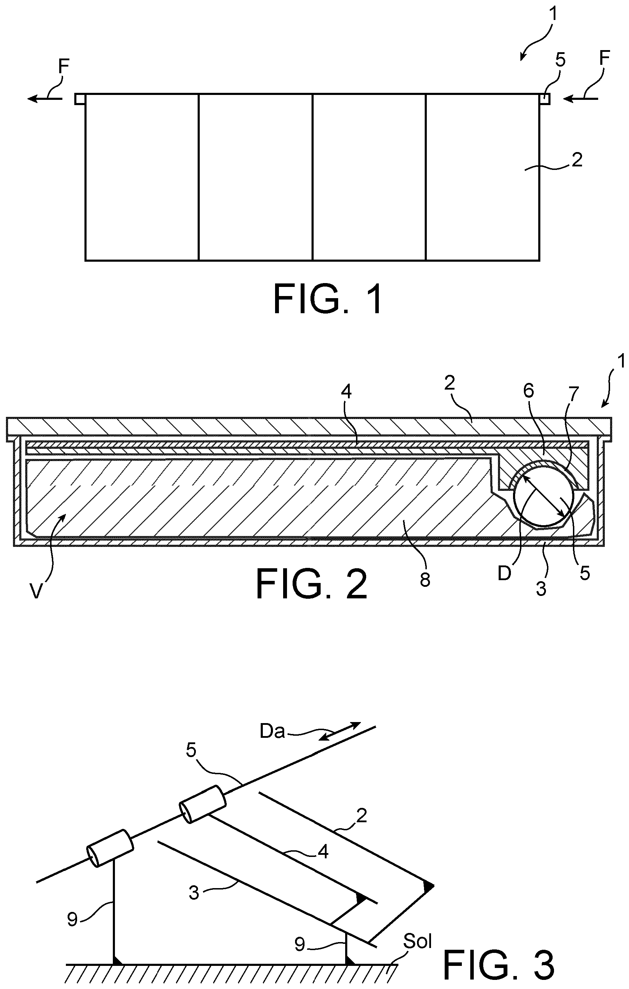

En référence aux figures 1 et 2, on a représenté un premier exemple de capteur solaire thermique 1 conforme à l'invention. La figure 1 est une vue du dessus du capteur solaire 1, et la figure 2 est une vue en coupe du capteur solaire 1.

Le capteur solaire thermique 1 comporte tout d'abord un élément formant la face avant 2 du capteur solaire 1. Dans cet exemple, la face avant du capteur solaire 1 est réalisée par une vitre transparente 2 pour laisser passer le rayonnement solaire en direction de l'absorbeur.

La vitre 2 peut être réalisée en verre. Elle peut être constituée d'un simple vitrage ou d'un double vitrage. Avantageusement, la vitre 2 permet de limiter les pertes thermiques vers le milieu ambiant.

De plus, le capteur solaire 1 comporte une coque 3 formant la face arrière du capteur solaire 1. Cette coque 3 est creuse et définit un volume interne V qui est refermé par le biais de la vitre transparente 2, comme visible sur la figure 2.

De façon avantageuse, la coque 3 permet de protéger l'ensemble du capteur solaire 1 contre les agressions climatiques, telles que les poussières, la pluie, l'humidité, entre autres.

De plus, le capteur solaire 1 comporte un absorbeur 4, qui est situé dans le volume interne V de la coque 3. L'absorbeur 4 est configuré pour absorber le rayonnement solaire et le transformer en chaleur. Avantageusement, l'absorbeur 4 comprend un revêtement sélectif permettant de limiter les pertes thermiques vers le milieu ambiant par rayonnement thermique dans l'infrarouge.

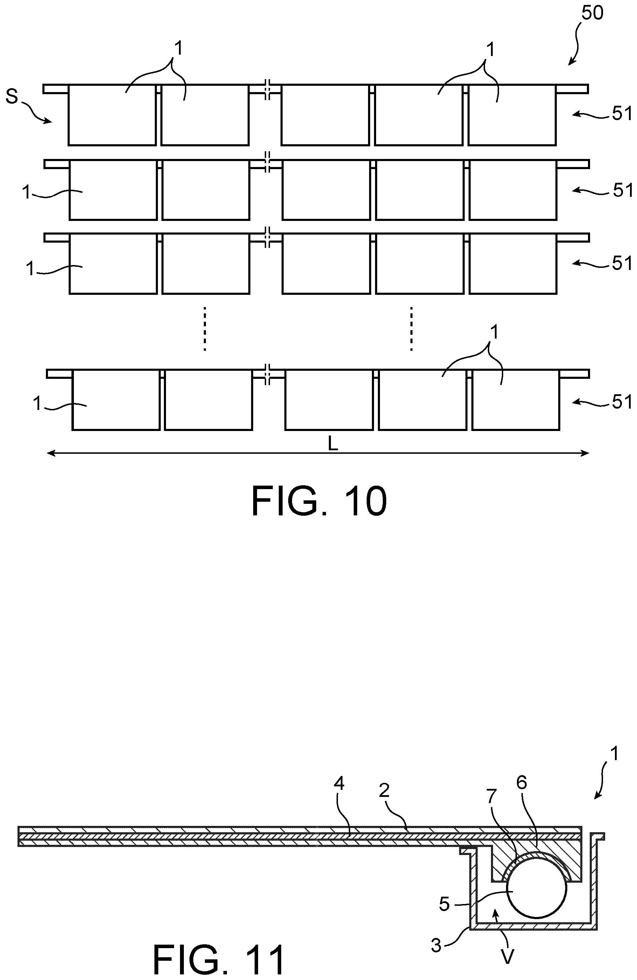

Le capteur solaire 1 comprend également un tube collecteur 5, situé dans le volume interne V de la coque 3 de sorte que l'absorbeur 4 soit entre l'élément formant la face avant 2 du capteur solaire 1 et le tube collecteur 5. Ce tube collecteur 5 comprend un fluide caloporteur F destiné à être réchauffé par le rayonnement solaire, qui circule selon les flèches représentées sur la figure 1 au travers du tube collecteur 5 et au travers d'autres tubes collecteurs 5 adjacents au capteur solaire 1 et présents dans le champ solaire 50 tel que représenté sur la figure 10.

Le tube collecteur 5 est avantageusement de section circulaire, comme visible sur la vue en coupe de la figure 2, mais toute autre type de section peut être utilisée, notamment rectangulaire, et par exemple rectangulaire aplatie, ce qui permet d'avoir une surface de contact plane et de limiter l'épaisseur du capteur solaire 1, et donc de réduire à la fois son encombrement et les pertes thermiques latérales.

La section circulaire est typiquement la plus appropriée car elle présente une bonne tenue à la pression et elle est facile à souder.

Dans le cas d'une section circulaire, le diamètre du tube collecteur 5 peut être choisi en fonction du débit massique de fluide caloporteur qui circule dans le champ solaire 50 associé. Le diamètre D du tube collecteur 5 peut typiquement être de l'ordre de 60 mm. Dans le cas d'un tube collecteur 5 de section non circulaire, la section de passage est de préférence équivalente à celle d'un tube de section circulaire qui aurait les bonnes caractéristiques hydrauliques.

De plus, le tube collecteur 5 est réalisé de préférence en métal, notamment en inox, par exemple de type 304 ou 316L, en acier, en cuivre ou en aluminium.

Le cas échéant, le tube collecteur 5 peut comporter des inserts pour améliorer l'échange thermique entre le fluide caloporteur et sa paroi (augmentation de la surface d'échange, augmentation des phénomènes de turbulence).

Le capteur solaire 1 comporte aussi un moyen de transfert de chaleur 6, situé dans le volume interne V de la coque 3 entre l'absorbeur 4 et le tube collecteur 5. Ce moyen de transfert de chaleur 6 permet d'assurer le transfert thermique tout en s'adaptant à la géométrie de l'absorbeur 4 d'une part et à celle du tube collecteur 5 d'autre part.

De plus, le capteur solaire 1 comporte un élément de contact thermique glissant 7, situé dans le volume interne V de la coque 3 entre le moyen de transfert de chaleur 6 et le tube collecteur 5. Cet élément de contact thermique glissant 7 est configuré pour assurer le transfert thermique et le déplacement entre le moyen de transfert de chaleur 6 et le tube collecteur 5, déplacement dû aux dilatations thermiques du tube collecteur 5.

Le capteur solaire 1 comporte en outre un élément d'isolation 8, situé dans le volume interne V de la coque 3, entre la coque 3 et l'ensemble formé par l'absorbeur 4, le moyen de transfert de chaleur 6, l'élément de contact thermique glissant 7 et le tube collecteur 5. L'élément d'isolation 8 est configuré pour limiter les pertes thermiques vers le milieu ambiant.

Enfin, le capteur solaire 1 comporte un châssis mécanique 9, solidarisé à la coque 3 à l'extérieur du volume interne V, configuré pour permettre la fixation du capteur solaire 1 au sol, représenté par la référence Sₒₗ sur la figure 3, et le support du tube collecteur 5 tout en autorisant une dilatation différentielle axiale du tube collecteur 5.

Il est à noter que le terme « sol » peut également correspondre à la surface d'une toiture. Aussi, de façon générale, le terme « sol » représente ici un élément support rigide.

Avantageusement, la coque 3 permet de maintenir l'ensemble formé par l'absorbeur 4, le moyen de transfert de chaleur 6, la vitre 2, l'élément de contact thermique glissant 7, le tube collecteur 5 et l'élément d'isolation 8 sur le châssis mécanique 9.

Par ailleurs, comme le fluide caloporteur F ne circule pas dans l'absorbeur 4 mais uniquement dans le tube collecteur 5, il faut pouvoir assurer le transfert de la chaleur produite par l'absorption du rayonnement solaire vers le tube collecteur 5. Ce transfert peut être réalisé par conduction et alors le moyen de transfert de chaleur 6 comporte un matériau à haute conductivité thermique. Ce transfert peut aussi être réalisé par l'utilisation d'un système à changement de phase, ou encore système diphasique, tels qu'un caloduc, un thermosiphon, une boucle diphasique, une boucle à pompage capillaire, entre autres. Tous ces systèmes ont la particularité d'utiliser le changement d'état d'un fluide, liquide ou vapeur, pour absorber la chaleur au niveau de l'absorbeur 4 (évaporateur) et la restituer au niveau du tube collecteur 5 (condenseur). Ils permettent de transférer la chaleur sur de grandes distances avec de faibles écarts de température : ils ont donc une conductivité thermique apparente élevée.

Avantageusement, le moyen de transfert de chaleur 6 est couplé thermiquement et mécaniquement au tube collecteur 5.

La figure 3 représente la chaîne cinématique associée au capteur solaire thermique 1 des figures 1 et 2, la référence Da représentant la dilatation axiale due à l'allongement du tube collecteur 5 lors de la montée en température du fluide caloporteur.

Il est important de constater que tous les éléments du capteur solaire thermique 1 sont fixes. Seul le tube collecteur 5 se déplace.

Plus spécifiquement, les mouvements liés aux dilatations du tube collecteur 5, de l'ordre de plusieurs centaines de millimètres, sont pris en compte dans la conception du capteur solaire thermique 1. Les petits déplacements de quelques dixièmes de millimètres entre les différents éléments du capteur solaire 1 ne sont pas représentés sur la figure 3. Les différentes liaisons sont rigides exceptées celles entre le tube collecteur 5 et le châssis 9, et entre le tube collecteur 5 et l'absorbeur 4 qui sont de type glissière ou pivot glissant.

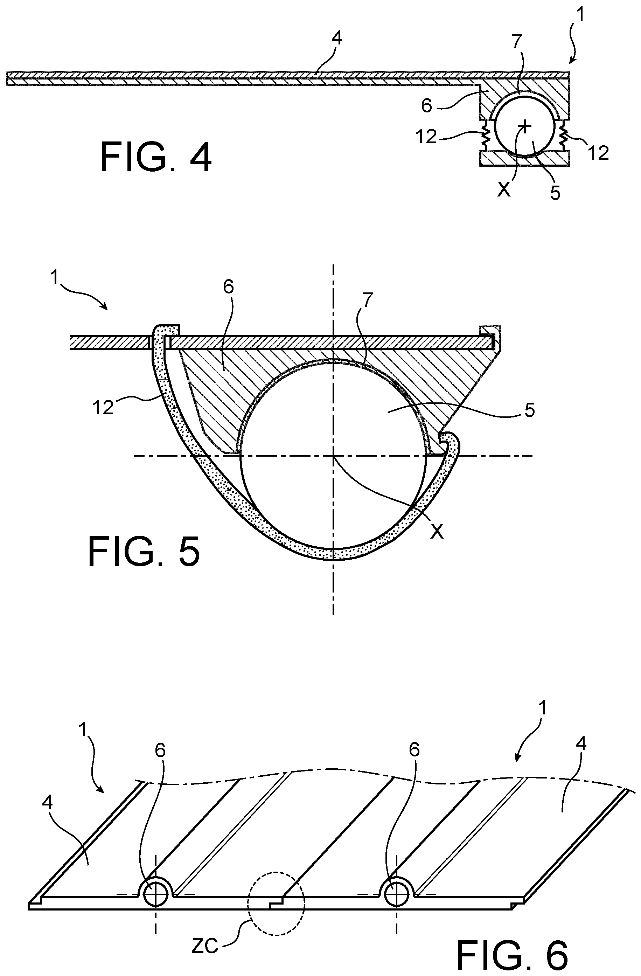

En référence maintenant aux figures 4 et 5, on va décrire le moyen de couplage élastique 12 prévu pour assurer le transfert thermique entre le moyen de transfert de chaleur 6 et le tube collecteur 5. A noter qu'il n'y a pas de chaleur traversant le moyen de couplage 12. Celui-ci n'a qu'une fonction mécanique d'elasticité pour assurer le contact mécanique, et thermique, entre les éléments 5, 7 et 6.

Si on réalise une analyse par rapport aux différentiels de dilatations thermiques, on peut considérer que la vitre 2, l'absorbeur 4, la coque 3 et l'élément d'isolation 8 sont fixes les uns par rapport aux autres lors des phases de fonctionnement. Par contre, le tube collecteur 5 se dilate selon son axe longitudinal X. Le moyen de couplage élastique 12 doit donc permettre une dilatation selon l'axe du tube collecteur 5.

Ainsi, la liaison entre le moyen de transfert de chaleur 6 et le tube collecteur 5 ne peut pas être rigide, mais est de type glissière en translation ou de type pivot glissant. On associe donc une possibilité de mouvement pour l'aspect mécanique et une pression de surface pour l'aspect thermique.

Ainsi, la figure 4 représente partiellement et schématiquement un capteur solaire thermique 1 comprenant un tel moyen de couplage 12 sous forme de ressorts 12 assurant une liaison élastique entre le tube collecteur 5 et le moyen de transfert de chaleur 6 en deux parties de part et d'autre du tube collecteur 5.

L'élément de contact thermique glissant 7 peut être réalisé par un matériau d'interface thermique tel que ceux rencontrés dans le domaine du refroidissement de l'électronique (silicone, graisse thermique, ...). Cependant, ce type de matériaux peut induire des problèmes de vieillissement en raison de la durée de vie demandée, de l'ordre de 25 ans, des déplacements liés à la dilatation (ces matériaux étant utilisés plutôt en statique), des niveaux de températures rencontrées et des efforts de frottement qu'ils peuvent générer.

Aussi, l'élément de contact thermique glissant 7 est préférentiellement à base de graphite, ou de tout autre composant graphité tel que la suie, le carbone pyrolytique, le charbon, entre autres. Ces matériaux présentent l'intérêt d'avoir une très bonne tenue en température et d'être un lubrifiant naturel qui limite les efforts de frottement. Il peut aussi être possible d'utiliser tout type de matériau graphite de type mousse ou feutre dont la conductivité thermique est suffisante, notamment supérieure à 1 W/m.K (par exemple une feuille carbone de type Sigraflex^{®} de SGL Carbon).

La figure 5 illustre par ailleurs, de façon schématique et partielle, un autre exemple de moyen de couplage 12 pour un capteur solaire thermique 1 selon l'invention. Dans cet exemple, le moyen de couplage 12 se présente sous la forme d'une lame métallique. Avantageusement, l'élasticité de la lame métallique 12 permet d'assurer le couplage voulu.

Par ailleurs, afin de limiter le nombre de pièces et le nombre d'interfaces thermiques, il peut être souhaitable que l'absorbeur 4 et le moyen de transfert de chaleur 6 soient constitués, en totalité ou en partie, d'une même et seule pièce. En particulier, les fonctions des éléments 4 et 6 peuvent être remplies par une même pièce à certains endroits.

Ainsi, le moyen de transfert de chaleur 6 peut être un caloduc ou un thermosiphon. Il se présente sous la forme d'un tube de section circulaire ou autre.

Un tube en aluminium peut être privilégié dans la mesure où ce matériau peut être facilement mis en forme par extrusion et il est facilement recyclable. On peut alors utiliser un fluide caloporteur de type alcane, l'eau étant à éviter en raisons de problèmes d'incompatibilité chimiques.

La figure 6 illustre, partiellement et schématiquement, deux absorbeurs 4 et deux moyens de transfert de chaleur 6 de deux capteurs solaires thermiques 1 adjacents.

L'absorbeur 4 et le moyen de transfert de chaleur 6 d'un même capteur solaire thermique 1 sont formés dans une même pièce. L'absorbeur 4 se présente sous forme de plaque et le moyen de transfert de chaleur 6 se présente sous forme de caloduc. L'absorbeur 4 permet donc ici de constituer l'enveloppe du caloduc.

Les moyens de transfert de chaleur 6 sont disposés en parallèle et le traitement sélectif est déposé sur l'absorbeur 4. Il existe une zone de recouvrement ZC entre les absorbeurs 4 qui permet de limiter les jeux entre deux moyens de transfert de chaleur 6 consécutifs, ces jeux se traduisant par une perte d'absorption du rayonnement et donc une dégradation des performances des capteurs.

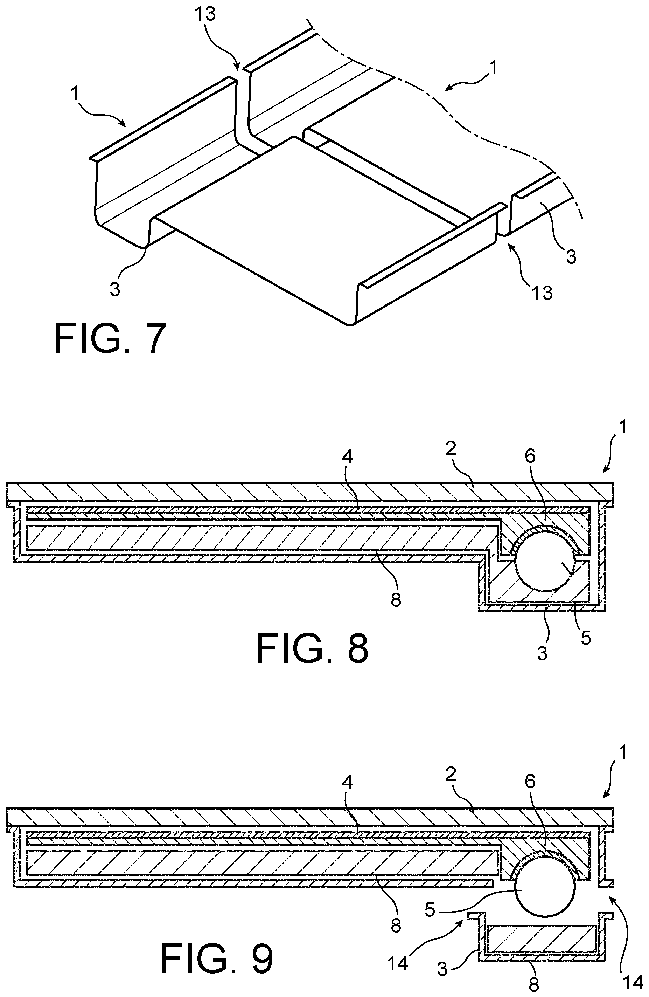

Par ailleurs, les figures 7 à 9 permettent d'illustrer des variantes de réalisation de la coque 3.

Le châssis mécanique 9 est fixé au sol, et permet de supporter le poids des éléments restants des capteurs solaires thermiques 1 et de reprendre les efforts liés aux conditions climatiques, notamment le vent. Ce châssis 9 est considéré comme fixe.

Selon la conception de la coque 3, le châssis 9 peut être simplement constitué de poteaux ou d'un ensemble poteaux et traverses.

La coque 3 peut être réalisées selon deux variantes : une variante modulaire et une variante unitaire.

Les figures 7 et 8 permettent d'illustrer une conception modulaire de la coque 3 d'un capteur solaire thermique 1.

Dans cette variante modulaire, la taille de la coque 3 est adaptée à la taille de la vitre 2. Il convient d'assembler le capteur solaire thermique 1 sur le champ solaire 50 à partir des différents éléments de base.

Comme illustrée par la figure 7, où deux coques 3 de deux capteurs solaires 1 sont visibles en perspective, la coque 3 peut être obtenue par pliage d'une feuille métallique, par exemple en acier ou en aluminium. Des nervures supplémentaires peuvent être réalisées pour rigidifier la coque 3. Il est aussi possible d'obtenir la coque 3 par un autre procédé, tel que l'impression tridimensionnelle ou le moulage de composites. La coque 3 est ensuite fixée sur le châssis 9 en parties haute et basse, le tube collecteur 5 étant déjà présent sur le châssis 9. Dans ce cas, il est préférable que le châssis soit constitué de poteaux et de traverses pour permettre une fixation de toutes les coques 3. Il faut ensuite placer l'élément d'isolation 8 et les absorbeurs 4 en les reliant au tube collecteur 5. Puis, la vitre 2 est placée et des joints d'étanchéités 13 sont mis en place d'une part entre vitre 2 et coque 3, et d'autre part entre les deux coques 3 successives, comme illustré sur la figure 7.

La figure 9 permet d'illustrer la variante unitaire de la coque 3. Dans cette variante, on considère que le capteur solaire thermique 1 est assemblé en usine. Les éléments de base restent ceux précédemment décrits. La coque 3 et l'assemblage de la vitre 2 et de la coque 3 sont réalisés conformément aux technologies existantes. Par contre, la coque 3 présente une ouverture 14 dans sa partie inférieure qui permet de déposer le capteur solaire thermique 1 sur le tube collecteur 5, puis permet la mise en place du contact thermique sur le tube collecteur 5. Cette dépose est donc réalisée sur le champ solaire 50. Un capot, correspondant à la partie haute de la coque 3, est ensuite ajouté pour fermer l'ensemble, assurer l'étanchéité et limiter les pertes thermiques.

Le capteur solaire 1 est également fixé sur la structure, et selon la rigidité de la coque 3 du capteur 1, il est possible de n'avoir qu'un nombre limité de points de fixation par capteur 1, ce qui peut permettre de réduire le châssis 9 à de simples poteaux.

De façon générale, comme représenté selon une vue de dessus sur la figure 10, le capteur solaire thermique 1 selon l'invention peut être appliqué sur toute installation, ou champ, solaire thermique 50 de grandes dimensions se présentant sous la forme de lignes 51, ou rangées, de capteurs solaires 1 disposées parallèlement et de grande longueur L, comprise entre 10 m et 300 m, étant notamment supérieure ou égale à 20 m, voire encore supérieure ou égale à 100 m.

Ainsi, la surface de champ solaire 5 formée par l'ensemble des capteurs solaires thermiques 1 peut être comprise entre 20 m² et 50000 m².

L'objectif est de favoriser la circulation du fluide caloporteur F dans les lignes 51 en diminuant les pertes de charge.

Par ailleurs, la constitution d'un réseau hydraulique simple, formé de coudes et de longueurs droites soudées, permet de simplifier les raccords et de limiter le risque de fuite, contrairement aux technologies traditionnelles où l'utilisation de raccords, de joints et de flexibles en mouvement est une source de fuites dans le temps qui peut se traduire par une perte de pression sur le réseau et une mise en ébullition du fluide caloporteur, voire un arrêt de l'installation. Avec une technologie classique de tubes soudés, ce risque de déboire est très fortement limité et les coûts de maintenance sont limités.

La disposition des capteurs solaires 1 sous forme de lignes 51 de grande longueur se traduit par une dilatation importante. Aussi, le capteur solaire 1 selon l'invention prend en compte cette contrainte. Les contraintes de dilatation sont présentes sur tous les types de capteurs et peuvent être prises en compte par des règles de conception usuelles (jeu de dilatation, etc.), mais ces dilatations sont généralement faibles sur des capteurs standards, de l'ordre de quelques dixièmes de millimètres, voire quelques millimètres. Avec des lignes de plus de 100 m de longueur, les dilatations peuvent atteindre 200 à 500 mm, voire plus dans l'axe longitudinal du collecteur, ce qui impose de revoir les règles de conception des capteurs. Lors d'une augmentation de la température du fluide, et donc de la température des différents éléments du capteur solaire 1, le tube se dilate sous l'effet de la chaleur : par exemple, avec un tube en acier, de coefficient de dilatation de 12.10⁻⁶ K⁻¹, pour une longueur de 100 m et un écart de température de 200°C, à savoir -20°C en hiver et +180°C en stagnation, la dilatation est de 240 mm. Il est nécessaire de prendre en compte cette dilatation afin d'éviter une déformation mécanique du champ solaire 50 de capteurs solaires 1, sa dégradation (avec l'apparition de défaut ou de fuite), voire sa destruction.

Par ailleurs, les faibles pertes de charges au niveau du fluide caloporteur F rencontrées sur ce capteur solaire 1 permettent de limiter les consommations électriques des pompes et donc d'améliorer le rendement du champ solaire 50.

De par l'aspect modulaire du capteur solaire 1 et la possibilité d'assemblage sur site, on peut envisager l'utilisation de ce type de capteur solaire 1 dans des lieux où l'accessibilité est restreinte, comme par exemple pour des surfaces disposées en toiture lorsqu'il n'est pas possible de déposer directement sur la toiture des éléments de capteurs de 15 ou 20 m² directement avec un bras télescopique ou une grue.

Comme le type d'assemblage fait disparaître les espaces vides généralement constatés entre deux capteurs solaires consécutifs sur des technologies traditionnelles, il est possible d'obtenir des surfaces lisses continues et donc d'envisager l'utilisation de ce type de capteurs solaires 1 sur des façades de bâtiment, et donc de considérer que l'ensemble du capteur solaire 1 constitue une paroi du bâtiment.

Le circuit hydraulique du fluide caloporteur F peut être simple, comportant un tube cylindrique avec des longueurs rectilignes ou des coudes. Par nature, ce type de circuit présente une bonne résistance à la pression, à l'encrassement et permet l'utilisation de fluides diphasiques. Dans le cas de la production de chaleur pour une application industrielle, ce type de capteur solaire 1 autorise donc l'utilisation directe du fluide industriel dans le champ solaire 50 et permet de supprimer l'utilisation d'un échangeur et de pompes associées. On peut également envisager d'avoir un changement de phase à l'intérieur du tube et donc d'utiliser ce type de capteur solaire 1 pour la production de vapeur pour des procédés industriels. Ces différents avantages permettent l'utilisation de ce capteur solaire 1 sur des champs solaires thermiques à concentration en amont des systèmes conventionnels, par exemple de type Fresnel ou cylindro-parabolique, pour le préchauffage des fluides lorsque les niveaux de températures sont bas, et compatibles avec la technologie de capteurs plans.

On peut également utiliser cette technologie dans le cas d'un couplage entre solaire photovoltaïque et solaire thermique. Les centrales solaires photovoltaïques se présentent également sous la forme de lignes. Il peut donc être envisagé d'utiliser la présente invention pour coupler la production des deux énergies. Il existe déjà dans le commerce des capteurs photovoltaïques et thermiques (PVT). Cependant, ils ne sont adaptés que pour des petites surfaces (coût, forte perte de charge, tenue à la pression).

Il suffit ainsi de reprendre l'exemple de capteur solaire 1 des figures 1 et 2, de supprimer la vitre 2 car les capteurs PVT ne sont pas vitrés, ainsi qu'éventuellement l'élément d'isolation 8.

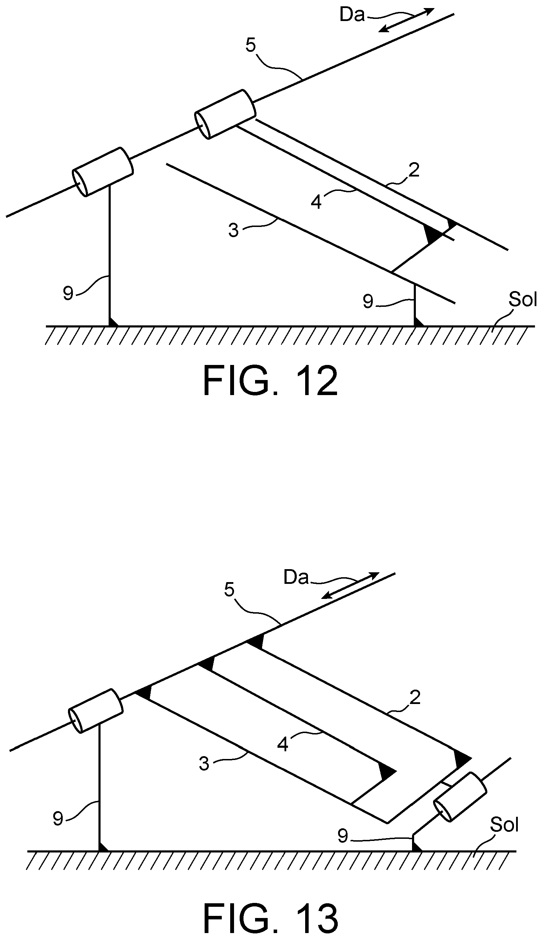

Ainsi, la figure 11 est une vue analogue à celle de la figure 2 représentant un tel capteur solaire 1 adapté pour le thermique et le photovoltaïque. De même, la figure 12 est une vue analogue à celle de la figure 3 représentant le schéma cinématique correspondant. Les modules photovoltaïques 2 des différents capteurs solaires 1 peuvent être mis en liaison thermique avec le moyen de transfert de chaleur 6 par un simple contact avec une pression mécanique exercée par un ressort.

La liaison mécanique entre les modules photovoltaïques 2 et le moyen de transfert de chaleur 6 est représentée comme étant rigide sur la figure 12, mais comme expliqué précédemment, le schéma a pour objectif de montrer comment sont reprises les dilatations différentielles du tube collecteur 5 de plusieurs centaines de millimètres et non les dilatations différentielles usuelles de quelques dixièmes de millimètres.

En particulier, sous réserve de l'existence d'une pente naturelle sur le sol ou terrain où les capteurs solaires 1 doivent être installés, et dans le cas de lignes 51 de longueur importante, il peut être possible d'avoir un concept de capteur solaire 1 auto-vidangeable, ce qui permet donc l'utilisation d'eau non glycolée comme fluide caloporteur dans des régions où le risque de gel existe. En effet, la simplicité du tube collecteur 5, similaire à tube horizontal, permet de faciliter la vidange, contrairement à ce qui est rencontré sur des capteurs solaires standards où la complexité du réseau hydraulique peut limiter la vidange et conduire à la destruction du capteur en cas de gel s'il est utilisé avec de l'eau pure.

Par ailleurs, le moyen de transfert de chaleur 6 peut, le cas échéant, comporter un dispositif de coupure, ce qui permet de limiter la température du fluide caloporteur, et donc la pression, durant les phases de stagnation.

Dans un exemple ne faisant pas partie de l'invention, une liaison rigide peut être assurée entre le moyen de transfert de chaleur 6 et le tube collecteur 5 sous réserve que la dilatation thermique différentielle du tube soit encaissée par un autre élément du système. Une alternative est de réaliser cette dilatation différentielle entre le châssis mécanique 9 et le reste du capteur solaire 1 : il est donc nécessaire que le reste du capteur solaire 1 puisse se déplacer sur le châssis mécanique 9. Comme le tube collecteur 5 se dilate axialement, il faut donc assurer une liaison glissière entre le châssis 9 et le reste du capteur solaire 1, comme illustré sur la figure 13. Cette solution impose que tous les efforts de dilatation liés aux frottements soient repris par le tube collecteur 5, et elle ne peut donc être utilisée que si ces efforts sont compatibles avec la résistance mécanique du tube (diamètre suffisant et longueur de ligne limitée).

## Revendications

1. Capteur solaire thermique (1), comprenant
- un élément formant la face avant (2) du capteur solaire (1),
- un volume interne (V) refermé par le biais d'au moins une partie de l'élément formant la face avant (2) du capteur solaire (1),
- un absorbeur (4), situé au moins en partie dans le volume interne (V), configuré pour absorber le rayonnement solaire et le transformer en chaleur, l'absorbeur (4) comprenant un revêtement sélectif permettant de limiter les pertes thermiques vers le milieu ambiant par rayonnement dans l'infrarouge,
- un tube collecteur (5), situé dans le volume interne (V) de sorte que l'absorbeur (4) soit entre l'élément formant la face avant (2) du capteur solaire (1) et le tube collecteur (5), comprenant un fluide caloporteur (F) destiné à être réchauffé par le rayonnement solaire,
- un moyen de transfert de chaleur (6), situé dans le volume interne (V) entre l'absorbeur (4) et le tube collecteur (5), **caractérise en ce qu'**il comporte encore:
- un élément de contact thermique glissant (7), situé dans le volume interne (V) entre le moyen de transfert de chaleur (6) et le tube collecteur (5), configuré pour assurer le transfert thermique et le déplacement entre le moyen de transfert de chaleur (6) et le tube collecteur (5) dû aux dilatations thermiques,
le capteur comportant un châssis mécanique (9), solidarisé à l'extérieur du volume interne (V), configuré pour permettre la fixation du capteur solaire (1) au sol et à un support du tube collecteur (5) tout en autorisant une dilatation différentielle axiale du tube collecteur (5).

2. Capteur solaire selon la revendication 1, **caractérisé en ce qu'**il comporte une coque (3) formant la face arrière du capteur solaire (1), définissant le volume interne (V) qui est refermé par le biais d'au moins une partie de l'élément formant la face avant (2) du capteur solaire (1).

3. Capteur solaire selon l'une des revendications 1 ou 2, **caractérisé en ce que** l'élément formant la face avant (2) du capteur solaire (1) est une vitre transparente (2).

4. Capteur solaire selon la revendication 3, **caractérisé en ce qu'**il comporte en outre un élément d'isolation (8), situé dans le volume interne (V), notamment entre la coque (3) et l'ensemble formé par l'absorbeur (4), le moyen de transfert de chaleur (6), l'élément de contact thermique glissant (7) et le tube collecteur (5), configuré pour limiter les pertes thermiques vers le milieu ambiant.

5. Capteur solaire selon l'une des revendications 1 ou 2, **caractérisé en ce que** l'élément formant la face avant (2) du capteur solaire (1) est un module photovoltaïque (2).

6. Capteur solaire selon l'une quelconque des revendications précédentes, **caractérisé en ce que** le moyen de transfert de chaleur (6) comporte un matériau à haute conductivité thermique.

7. Capteur solaire selon l'une quelconque des revendications 1 à 5, **caractérisé en ce que** le moyen de transfert de chaleur (6) comporte un système à changement de phase, par exemple un caloduc, un thermosiphon, une boucle diphasique et/ou une boucle à pompage capillaire.

8. Capteur solaire selon l'une quelconque des revendications précédentes, **caractérisé en ce que** l'élément formant la face avant (2) du capteur solaire thermique (1), l'absorbeur (4) et la coque (3) sont fixes les uns par rapport aux autres, tandis que le tube collecteur (5) est apte à se dilater selon axe longitudinal (X).

9. Capteur solaire selon l'une quelconque des revendications précédentes, **caractérisé en ce qu'**il comporte un moyen de couplage (12) assurant la liaison entre le moyen de transfert de chaleur (6) et le tube collecteur (5), cette liaison étant de type glissière en translation ou de type pivot glissant.

10. Capteur solaire selon l'une quelconque des revendications précédentes, **caractérisé en ce que** l'absorbeur (4) et le moyen de transfert de chaleur (6) sont constitués, en totalité ou en partie, d'une même et seule pièce, le moyen de transfert de chaleur (6) étant sous la forme d'un tube, notamment d'un caloduc ou d'un thermosiphon.

11. Champ solaire (50), **caractérisé en ce qu'**il comporte une pluralité de lignes solaires (51), comprenant chacune une pluralité de capteurs solaires thermiques (1) selon l'une quelconque des revendications précédentes, les lignes solaires (51) étant notamment disposées de façon parallèle les unes aux autres.

12. Champ solaire selon la revendication 11, **caractérisé en ce que** la longueur (L) de chaque ligne solaire (51) est comprise entre 10 m et 300 m, étant notamment supérieure ou égale à 20 m, voire encore supérieure ou égale à 100 m.

13. Champ solaire selon la revendication 11 ou 12, **caractérisé en ce que** la surface de champ solaire (S) formée par l'ensemble des capteurs solaires thermiques (1) est comprise entre 20 m² et 50000 m².

14. Champ solaire selon l'une des revendications 11 à 13, **caractérisé en ce que** les capteurs solaires thermiques (1) comportent chacun une coque (3) de conception modulaire, comprenant l'assemblage directement sur le champ solaire (50), ou de conception unitaire, comprenant un assemblage préalable avant installation sur le champ solaire (50).

## Patentansprüche

1. Thermischer Sonnensensor (1), umfassend:
- ein Element, das die Vorderseite (2) des Sonnensensors (1) bildet,
- ein Innenvolumen (V), das durch mindestens einen Teil des Elements, das die Vorderseite (2) des Sonnensensors (1) bildet, wieder verschlossen wird,
- einen Absorber (4), der sich mindestens teilweise in dem Innenvolumen befindet (V), der dazu eingerichtet ist, um die Sonnenstrahlung zu absorbieren und in Wärme umzuwandeln, wobei der Absorber (4) eine selektive Beschichtung umfasst, die es ermöglicht, die Wärmeverluste in die Umgebung durch Infrarotstrahlung zu begrenzen,
- ein Sammelrohr (5), das sich in dem Innenvolumen befindet (V), so dass sich der Absorber (4) zwischen dem Element, das die Vorderseite (2) des Sonnensensors (1) bildet, und dem Sammelrohr (5) befindet, das ein Wärmeträgermedium (F) umfasst, das dazu bestimmt ist, durch Sonnenstrahlung erwärmt zu werden,
- ein Wärmeübertragungsmittel (6), das sich in dem Innenvolumen (V) zwischen dem Absorber (4) und dem Sammelrohr (5) befindet, **dadurch gekennzeichnet, dass** es ferner Folgendes aufweist:
- ein thermisches Gleitkontaktelement (7), das sich in dem Innenvolumen (V) zwischen dem Wärmeübertragungsmittel (6) und dem Sammelrohr (5) befindet, das so eingerichtet ist, um die Wärmeübertragung und die Bewegung zwischen dem Wärmeübertragungsmittel (6) und dem Sammelrohr (5) aufgrund von Wärmeausdehnungen zu gewährleisten,
wobei der Sensor einen mechanischen Rahmen (9) aufweist, der außerhalb des Innenvolumens (V) befestigt ist, der so eingerichtet ist, um die Befestigung des Sonnensensors (1) am Boden und an einer Halterung des Sammelrohrs (5) zu ermöglichen und gleichzeitig eine axiale Differenzausdehnung des Sammelrohrs (5) zuzulassen.

2. Sonnensensor nach Anspruch 1, **dadurch gekennzeichnet, dass** er eine Schale (3) aufweist, die die Rückseite des Sonnensensors (1) bildet und das Innenvolumen (V) definiert, das durch mindestens einen Teil des Elements, das die Vorderseite (2) des Sonnenkollektors (1) bildet, verschlossen ist.

3. Sonnensensor nach einem der Ansprüche 1 oder 2, **dadurch gekennzeichnet, dass** das die Vorderseite (2) des Sonnensensors (1) bildende Element eine transparente Scheibe (2) ist.

4. Sonnensensor nach Anspruch 3, **dadurch gekennzeichnet, dass** er ferner ein in dem Innenvolumen (V) befindliches Isolierelement (8) aufweist, insbesondere zwischen der Schale (3) und der durch den Absorber (4), das Wärmeübertragungsmittel (6), das thermische Gleitkontaktelement (7) und das Sammelrohr (5) gebildeten Baugruppe, die so eingerichtet ist, dass sie die Wärmeverluste in die Umgebungsumgebung begrenzt.

5. Sonnensensor nach einem der Ansprüche 1 oder 2, **dadurch gekennzeichnet, dass** das die Vorderseite (2) des Sonnensensors (1) bildende Element ein Photovoltaikmodul (2) ist.

6. Sonnensensor nach einem der vorhergehenden Ansprüche, **dadurch gekennzeichnet, dass** das Wärmeübertragungsmittel (6) ein Material mit hoher Wärmeleitfähigkeit aufweist.

7. Sonnensensor nach einem der Ansprüche 1 bis 5, **dadurch gekennzeichnet, dass** das Wärmeübertragungsmittel (6) ein Phasenwechselsystem, beispielsweise einen Wärmekanal, einen Thermosiphon, eine Zweiphasenschleife und/oder eine Kapillarpumpschleife, aufweist.

8. Sonnensensor nach einem der vorhergehenden Ansprüche, **dadurch gekennzeichnet, dass** das Element, das die Vorderseite (2) des thermischen Sonnensensors (1), des Absorbers (4) und der Schale (3) bildet, fest miteinander verbunden sind, während das Sammelrohr (5) in Längsachse ausdehnbar ist (X).

9. Sonnensensor nach einem der vorhergehenden Ansprüche, **dadurch gekennzeichnet, dass** er ein Kopplungsmittel (12) aufweist, das die Verbindung zwischen dem Wärmeübertragungsmittel (6) und dem Sammelrohr (5) gewährleistet, wobei diese Verbindung von dem Typ Gleitschiene in Translation oder von dem Typ Gleitzapfen ist.

10. Sonnensensor nach einem der vorhergehenden Ansprüche, **dadurch gekennzeichnet, dass** der Absorber (4) und das Wärmeübertragungsmittel (6) ganz oder teilweise aus einem einzigen Teil bestehen, wobei das Wärmeübertragungsmittel (6) die Form eines Rohrs, insbesondere eines Wärmekanals oder eines Thermosiphons, aufweist.

11. Solarfeld (50), **dadurch gekennzeichnet, dass** es eine Vielzahl von Solarlinien (51) umfasst, die jeweils eine Vielzahl von thermischen Solarsensoren (1) nach einem der vorhergehenden Ansprüche umfassen, wobei die Solarlinien (51) insbesondere parallel zueinander angeordnet sind.

12. Solarfeld nach Anspruch 11, **dadurch gekennzeichnet, dass** die Länge (L) jeder Solarlinie (51) zwischen 10 m und 300 m beträgt, insbesondere größer oder gleich 20 m oder sogar größer oder gleich 100 m ist.

13. Solarfeld nach Anspruch 11 oder 12, **dadurch gekennzeichnet, dass** die von der Gesamtheit der thermischen Solarsensoren (1) gebildete Solarfeldfläche (S) zwischen 20 m² und 50000 m² beträgt.

14. Solarfeld nach einem der Ansprüche 11 bis 13, **dadurch gekennzeichnet, dass** die thermischen Solarsensoren (1) jeweils eine modular aufgebaute Schale (3) aufweisen, die die Montage direkt auf dem Solarfeld (50), oder eine Einheitskonstruktion, umfassend eine Vormontage vor der Installation auf dem Solarfeld (50), umfasst.

## Claims

1. Thermal solar sensor (1), comprising:
- an element forming the front face (2) of the solar sensor (1),
- an internal volume (V) closed via at least a part of the element forming the front face (2) of the solar sensor (1),
- an absorber (4), located at least partially in the internal volume (V), configured to absorb the solar radiation and transform it into heat, the absorber (4) comprising a selective coating making it possible to limit the thermal losses to the ambient environment by infrared radiation,
- a collecting tube (5), located in the internal volume (V) so that the absorber (4) is between the element forming the front face (2) of the solar sensor (1) and the collector tube (5), comprising a heat transfer fluid (F) intended to be heated by solar radiation,
- a heat transfer means (6), located in the internal volume (V) between the absorber (4) and the collecting tube (5), **characterised in that** it further includes:
- a sliding thermal contact element (7), located in the internal volume (V) between the heat transfer means (6) and the collector tube (5), configured to ensure heat transfer and movement between the heat transfer means (6) and the collector tube (5) due to thermal expansions,
the sensor including a mechanical frame (9), secured to the outside of the internal volume (V), configured to allow the solar sensor (1) to be attached to the ground and to a support of the collector tube (5) while allowing axial differential expansion of the collector tube (5).

2. Solar sensor according to claim 1, **characterised in that** it includes a shell (3) forming the rear face of the solar sensor (1), defining the internal volume (V) which is closed via at least a part of the element forming the front face (2) of the solar sensor (1).

3. Solar sensor according to one of claims 1 or 2, **characterised in that** the element forming the front face (2) of the solar sensor (1) is a transparent glass (2).

4. Solar sensor according to claim 3, **characterised in that** it further comprises an insulating element (8), located in the internal volume (V), in particular between the shell (3) and the assembly formed by the absorber (4), the heat transfer means (6), the sliding thermal contact element (7) and the collector tube (5), configured to limit the heat losses to the ambient environment.

5. Solar sensor according to one of claims 1 or 2, **characterised in that** the element forming the front face (2) of the solar sensor (1) is a photovoltaic module (2).

6. Solar sensor according to any one of the preceding claims, **characterised in that** the heat transfer means (6) comprises a material with high thermal conductivity.

7. Solar sensor according to any one of claims 1 to 5, **characterised in that** the heat transfer means (6) comprises a phase-change system, for example a heat pipe, a thermosiphon, a two-phase loop and/or a capillary pumping loop.

8. Solar sensor according to any one of the preceding claims, **characterised in that** the element forming the front face (2) of the thermal solar sensor (1), the absorber (4) and the shell (3) are secured to one another, while the collector tube (5) is able to expand along the longitudinal axis (X).

9. Solar sensor according to any one of the preceding claims, **characterised in that** it includes a coupling means (12) ensuring the connection between the heat transfer means (6) and the collector tube (5), this connection being of the sliding translation or sliding pivot type.

10. Solar sensor according to any one of the preceding claims, **characterised in that** the absorber (4) and the heat transfer means (6) consist, in whole or in part, of one and the same single part, the heat transfer means (6) being in the form of a tube, in particular a heat pipe or a thermosiphon.

11. Solar field (50), **characterised in that** it comprises a plurality of solar lines (51), each comprising a plurality of thermal solar sensors (1) according to any one of the preceding claims, the solar lines (51) being in particular arranged parallel to one another.

12. Solar field according to claim 11, **characterised in that** the length (L) of each solar line (51) is between 10 m and 300 m, being in particular greater than or equal to 20 m, or even greater than or equal to 100 m.

13. Solar field according to claim 11 or 12, **characterised in that** the solar field area (S) formed by all the thermal solar sensors (1) is between 20 m² and 50,000 m².

14. Solar field according to one of claims 11 to 13, **characterised in that** the thermal solar sensors (1) each include a shell (3) of modular design, comprising assembly directly on the solar field (50), or of unitary design, comprising prior assembly before installation on the solar field (50).
